# EUROPEAN PATENT SPECIFICATION

(11) **EP 4 419 475 B1**
(45) Date of publication and mention of the grant of the patent: **14.01.2026**
(21) Application number: 22823150.2
(22) Date of filing: 23.11.2022
(51) Int. Cl.: B67D 7/02, B60K 15/00, B67D 7/56, B67D 7/34, B67D 7/32, B67D 7/00, F02M 25/00

(54) **CONTAINER WITH VALVE FOR STORING, DISPENSING AND TRANSPORTING AIRCRAFT FUEL ADDITIVES, ASSOCIATED KIT AND METHOD**
BEHÄLTER MIT VENTIL ZUR LAGERUNG, ABGABE UND ZUM TRANSPORT VON FLUGZEUGKRAFTSTOFFZUSÄTZEN, ZUGEHÖRIGES KIT UND VERFAHREN
RÉCIPIENT MUNI D'UNE SOUPAPE POUR STOCKER, DISTRIBUER ET TRANSPORTER DES ADDITIFS DE CARBURANT D'AÉRONEF, KIT ET PROCÉDÉ ASSOCIÉS

(30) Priority: 01.12.2021 IT 202100030386
(43) Date of publication of application: 28.08.2024
(73) Proprietor: Euromeccanica Mazzer S.r.l., 04019 Terracina (LT) (IT); Polcomix Italia Srl, 10121 Torino (TO) (IT)
(72) Inventor: MAZZER, Alberto, 04019 Terracina (LT) (IT); PERDRIEL, Olivier Guillaume François, 10121 Torino (TO) (IT)
(74) Representative: Fiammenghi, Eva
(86) International application number: PCT/IB2022/061345
(87) International publication number: WO 2023/100036

(56) References cited:
- DE-A1- 4 231 635
- DE-U1- 8 429 005
- US-A- 5 694 991
- US-A1- 2013 306 028

## Description

### Field of the invention

The present invention relates to the field of containment and dispensing devices intended for the storage and transport of a suitable additive, in particular for the refueling of aircraft fuel. Even more specifically, the object of the present invention is aimed at speeding up and simplifying the mixing and refueling process, through numerous smart functions and an innovative valve system.

### Prior art

New engine technologies, such as diesel engines with the common rail system, high pressure fuel injection and jet engines for avionics use, are very efficient, but are very sensitive to fuel quality. Therefore, there are advantages to using a fuel that contains additives; in particular additives to improve fuel distribution in the engine, additives to improve engine performance and additives to improve the stability of engine operation and those necessary to maintain the operating conditions of the tanks avoiding or delaying the formation of deposits, fungi and algae deleterious for the normal functioning of engines. The discussion can also be extended to the refueling of aircraft.

It is known that there are systems that allow these additives to be introduced into the fuel, which are based on a large capacity tank of at least 2 or 3 liters of volume that contains the additive reserve, which is positioned in areas close to the fuel tank.

The current strategies for dosing additives, moreover, also require high precision dosing pumps, these must be ordered through a specific and additional electronic unit (or ECU). The metering unit must be handled with care to ensure an exact additive-fuel ratio to avoid premature clogging due to minerals being collected in the tank. Normally, when the fuel level rises in the tank after adding fuel, the computer tells the pump how much additive to inject into the tank to maintain a constant concentration of additive in the fuel tank.

An example is provided by patent application FR2668203. The patent describes a device for introducing an additive into the fuel tank useful for regenerating the particulate filter. This technical solution has the drawback of requiring a tank of significant volume for the additive as well as an electronic system for measuring the refueling of the fuel tank. Furthermore, this technical solution increases the weight of the mixer and therefore the fuel consumption. Another example is that provided by patent application MX2013008962A. The invention relates to a device for dispensing a liquid additive in a fuel circulation circuit for an internal combustion engine. Said device comprises a tank for the liquid additive which allows an additive to be distributed in the fuel circulation circuit by means of a distributor. The latter comprises an additive chamber in communication with the fuel circulation circuit and at least a movable wall, which maintains equal pressure between the additive in the tank and the fuel in the additive chamber.

The solutions presented, although extremely precise, have high costs.

The object of the present invention is to overcome this problem by proposing a device which advantageously allows all aircraft refueling operations to be sped up and made easier, exploiting multiple smart functions. Since there are no systems on the market for containing, transporting and dispensing additives dedicated to mixing units that are easy to use and which guarantee a known and constant dosage, the present invention, by virtue of its small and ergonomic shape, not only allows a practical use/transport, but also allows one to considerably reduce costs; this latter factor is further guaranteed since the components are totally recyclable and the system is very easy to use, also not requiring specialized operators.

DE 42 31 635 A1 discloses a container for storing and transporting flowable media, in particular liquids, comprising an external rigid container and an internal flexible container which cannot be stretched/dilated. The internal container is provided with a sleeve removably sitting onto and inside a sleeve of the external rigid container. The internal container is reusable. In the sleeve of the internal flexible container there are formed two separate pathways for fluid streams, one of them being in direct communication with the inside of the internal flexible container, while the other leads to the inside of the internal flexible container through a flexible plunging tube or through a (preferably perforated) hose. A self-closing closure member is associated, inside said sleeve of the internal flexible container, to both pathways for fluids. By means of the sleeve of the external container it is possible to selectively connect/couple either a protection cap for both sleeves and for the closure member, or a filling and/or emptying fixture which is adapted to create a communication to said two pathways, and to a third pathway connecting the inside of the fixture to a space/volume formed between the external rigid container and the internal flexible container.

The three pathways for fluid streams are arranged coaxially and form an inner pathway, an intermediate pathway, and an external pathway. By injecting or withdrawing a gas stream into/from the container, through the aforesaid fixture, by using the intermediate pathway and/or the external pathway, filling and emptying operations can be carried out on the container by letting the liquid flow in or respectively out of the container through the inner pathway.

### Description of the invention

The invention is defined in the appended claims.

According to the present invention, a container with a valve for storing, dispensing and transporting aircraft additives, and mixer, is produced, which allows the dispensing of certain additives, through an easy and simple system for the operator *on site* and/or the company that benefits from it.

The present invention consists of a container body resistant to impacts and pressures, as well as to possible chemical attacks deriving from their presence and use during the refueling steps, in such a way as to keep the additive present inside unaltered.

The body of the container is advantageously produced in recyclable materials and with an ergonomic shape; this latter feature allows for easy transport even within the aircraft and/or confined spaces.

In one of the preferred embodiments of the invention, the body of the container may comprise a pressurization and containment bag inside it, which further improves the separation of the additive from the container body itself, making it completely recyclable and advantageously safe.

Said pressurization and containment bag, in addition to being advantageously extractable from the coupling system with safety valve, ensures that additive residues remain therein, also produced entirely in recyclable material to allow correct disposal thereof.

At one of the ends of the container body of the present invention there is a coupling system with valve which allows the connection for the transfer of the additive in a firm and safe manner, and for the hermetic closure of the container.

The container with valve for storage, dispensing and transport of aircraft fuel additives, and mixer, according to the invention, includes an innovative connection valve that has several moving and fixed parts, as well as the necessary seals. The valve is a device that mainly consists of two valves: container valve and mixer valve. These valves are one installed on the mixer and the other installed on the coupling system of the container. The main feature of the two valves is that they are complementary and exclusively combinable without having to be connected to other devices. The processing tolerances and the adequate gaskets, whose seats have been specially designed, allow the additive to flow from the container to the mixer valve, passing through the channels generated during connection.

In a preferred embodiment of the present invention, the container comprises compression-loaded springs installed in the obtained channels, said springs being suitable to exert the pressure required to close/open each surface functional to the containment and the through-flow of the fluid transported by means of the container.

The method of operation of the aforementioned valve system is presented below, in such a way that once coupled they allow the additive to pass from the container to the mixer.

The method has a first step in which the operator couples the two valves, placing the movable shutter of the container on the fixed shutter of the mixer.

The two shutters form an abutment point for both valves. The operator, in this step, is facilitated by some seats for the alignment of the two valves. After aligning the valves and applying slight pressure, the operator stabilizes the valves and, therefore, also the container, ensuring that it is fixed.

The method has a second step in which a further pressure exerted by the operator allows the fixed shutter of the container to slide inside the casing of the mixer valve and generate a channel that fills with additive without, however, passing through the valve of the mixer. Subsequently, in the third step, the operator rotates the container and at the end of the rotation, the movable shutter of the mixer, pushed by the slider to an abutment point of the slider (both belonging to the mixer valve), is completely retracted, while the movable shutter of the container is fully extended inside the casing of the mixer valve: all the passage channels thus created are completely open and the additive flows from the container to the mixer.

Once the additive has been dispensed, the operator rotates the container in the opposite direction and disengages the movable shutter of the mixer which, returning to the rest position, creates a vacuum thereby drawing any liquid left in the channel. This sliding, with the consequent drawing of liquid, excludes the formation of any residual drops on the external surface of the mixer valve. By pulling out the container and its valve from the container, the movable container shutter returns to its original position. In this step, the gaskets present inside "scrape" any residual additive from the walls of the fixed shutter of the container bringing them back inside it; in this way, drops and leaks are avoided also on the side of the container. The invention comprises an openable/reclosable hermetic sealing system with the aim of isolating the additive contained and not allowing it to escape randomly or accidentally, even through a container valve with the task of keeping both the hermetic sealing system stable and secure and the tightness of the body during the dispensing of the additive.

According to the present invention, the container with valve for storing, dispensing, and transporting aircraft fuel additives, and mixer, has inside it a mechanical sensor (for example a feeler) or a level gauge, installed to ensure the display of information relating to the quantity of additive remaining inside the container body and therefore allow the operator *on site* a prompt response. Where possible, and allowed by the work environment and by the type of fluids to be mixed, the use of electronic components is envisaged for the transmission of information and possible remote monitoring, if necessary.

The present invention also provides an alarm system applied to the body of the container, by means of a common mechanical or magnetic restraint device. The alarm system is connected to a connection module, with or without wires, which allows the communication of the data detected by said level sensor to at least an alarm system: in this way, an LED light signal is possibly emitted which warns the operator *on site* of the imminent exhaustion of the additive inside the body.

In one of the preferred embodiments, the device also provides a sight glass with the purpose of making the additive level visible inside the container body in an additional way to the sensor or level gauge.

The invention may have a QR code on the external surface of the container body, which may be scanned by the operator through the camera of any mobile device; after scanning this QR code, entirely made of material resistant to fluids including the aircraft fuel additive itself, the operator can instantly access all the information relating to the aircraft fuel additive and the container with valve for storing, dispensing and transporting additives, such as expiration date, date of manufacture, etc.

The QR code may also be printed by means of a LASER source directly on the body and preferably in a position that is easily identifiable.

Finally, the invention in one of the preferred embodiments may comprise an RFID tag, readable by suitable devices provided with RFID data readers supplied to the operators, containing and referring to the information of the product and its content.

The advantages offered by the present invention are clear in the light of the above description and will be even clearer from the accompanying figures and the related detailed description.

### Description of the figures

The invention will hereinafter be described in at least a preferred embodiment thereof by way of non-limiting example with the aid of the accompanying figures, in which:
- FIGURE 1 shows an external front view of the container with valve for storing, dispensing and transporting aircraft fuel additives 100 with hermetic seal applied;
- FIGURE 2 shows a vertical section view of the internal components of the container with valve for storing, dispensing and transporting aircraft fuel additives 100 in use;
- FIGURE 3 shows a front view of the "multiple manifold-like" system 200 included in the kit associated with the container with valve for storing, dispensing and transporting aircraft fuel additives 100, and mixer 300;
- FIGURE 4 shows a front view of the container with valve for storing, dispensing and transporting aircraft fuel additives 100, and mixer (300), when it is engaged on a "multiple manifold-like" system 200 while a refueling is carried out through a mixer 300;
- FIGURE 5 illustrates a section of the valve system 40 and its components, in the rest step.

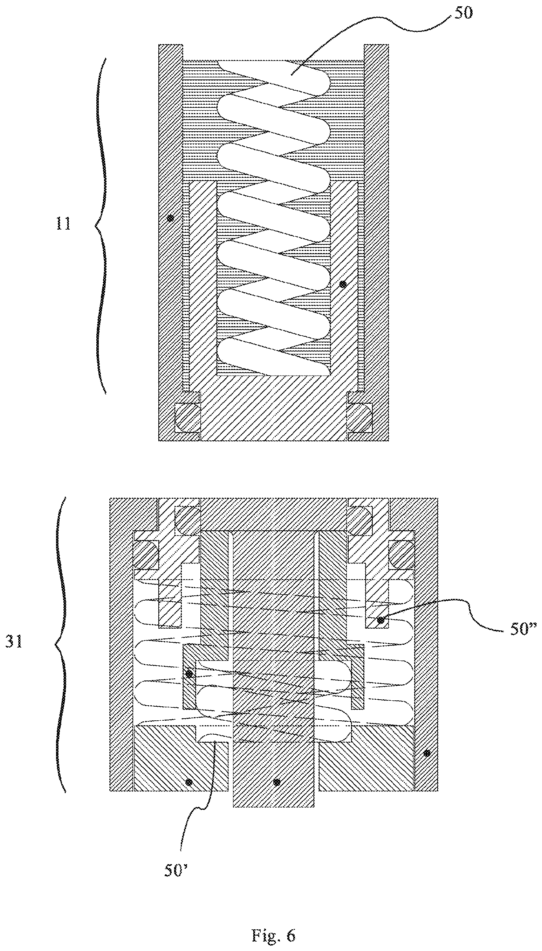

- FIGURE 6 schematically shows the positioning of said springs 50-50'-50" loaded by compression.

### Detailed description of the invention

The present invention will now be described purely by way of non-limiting or binding example with the aid of the figures, which illustrate some embodiments relative to the present inventive concept.

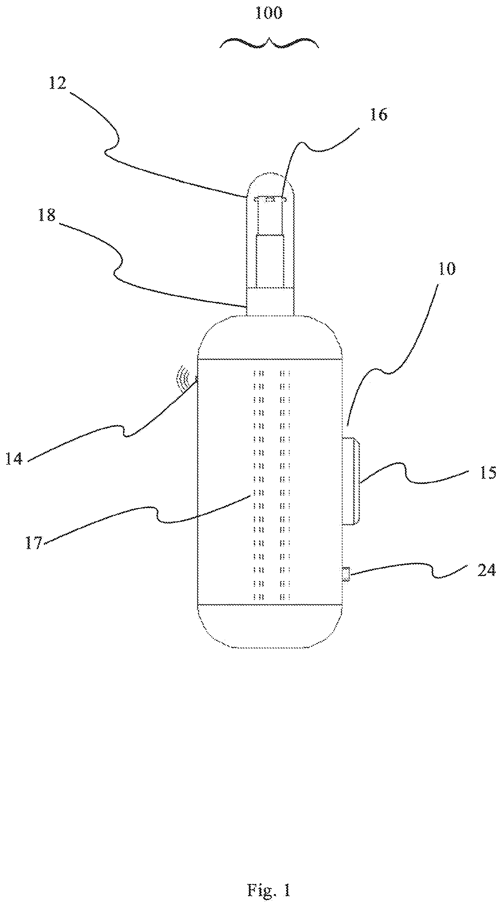

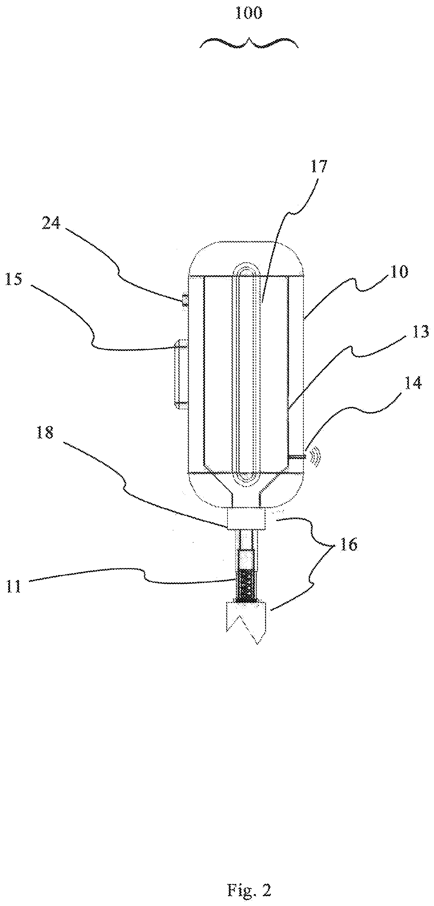

With reference to FIGS. 1 and 2, the main components of the container with valve for storing, dispensing and transporting aircraft fuel additives 100 are shown. In particular, FIG. 1 shows a front view of the external components of the container with valve for storing, dispensing and transporting aircraft fuel additives 100; FIG. 2 shows the internal components through a sectional view of the container with valve for storing, dispensing and transporting aircraft fuel additives 100, during use.

The invention has a body 10 of the container, suitable to contain and isolate, directly or indirectly, by means of a suitable pressurization and containment bag 13, the additives and also to ensure a protected and safe environment for said substances. Said container body 10 has an ergonomic and compact shape which allows it to be easily transported and is made of recyclable material. Said body 10 is provided with a compensation valve 24 whose function is to let air in without letting the additive escape.

Inside the body 10 there is a level sensor or gauge 17 suitable for detecting the quantity of additive present. Said level sensor, feeler or gauge 17 may also detect the shape of said pressurization and containment bag 13 and, consequently, where permitted by the environment, by the use and by the features of the type of fluid, transmit the information by means of a connection module with or without wires, by way of example but not limited to a Wi-Fi connection, to the alarm system 14 which, by means of a visual, luminous or acoustic signal, warns the operator about the state of consumption of the aircraft fuel additive. Inside said container body 10 there is said pressurization and containment bag 13 whose purposes are to provide further containment for the additive and to facilitate the suction of the fluid. On the surface of said body 10 of the container there is positioned the alarm system 14, connected with a connection module with or without wires, by way of non-limiting example via the Wi-Fi network, to said level sensor or gauge 17, suitable to inform the operator *on site* of the quantity of aircraft fuel additive inside said body 10. Said alarm system 14, warns by means of a possible LED light signal and/or a possible sound signal of the progressive depletion of the aircraft fuel additive.

Said container body 10 has a coupling system 16 installed at one end 18, suitable to keep the connection between said body 10 and a refueling system (mixer) stable when dispensing the aircraft fuel additive into the aircraft fuel stream.

The invention has at least a hermetic sealing system 12 which may be opened/closed, which allows the safe isolation of the additive inside said body 10 of the container.

The container with valve for storing, dispensing and transporting aircraft fuel additives 100 comprises a sight glass 15 suitable to be queried at any time by the operator to check the level of the additive inside the body 10; said sight glass 15 allows adding a further level of control in addition to the sensor or level gauge 17. In a specific embodiment for applications in particularly dangerous and/or explosive environments, provision is made for the construction of a container made of transparent material or which allows seeing directly, moment by moment, what the level of fluid consumption inside the container is.

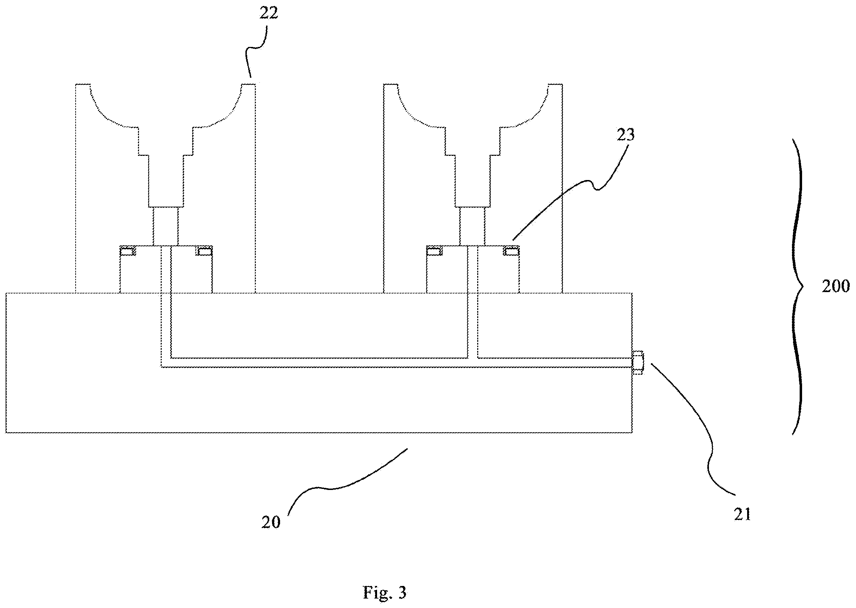

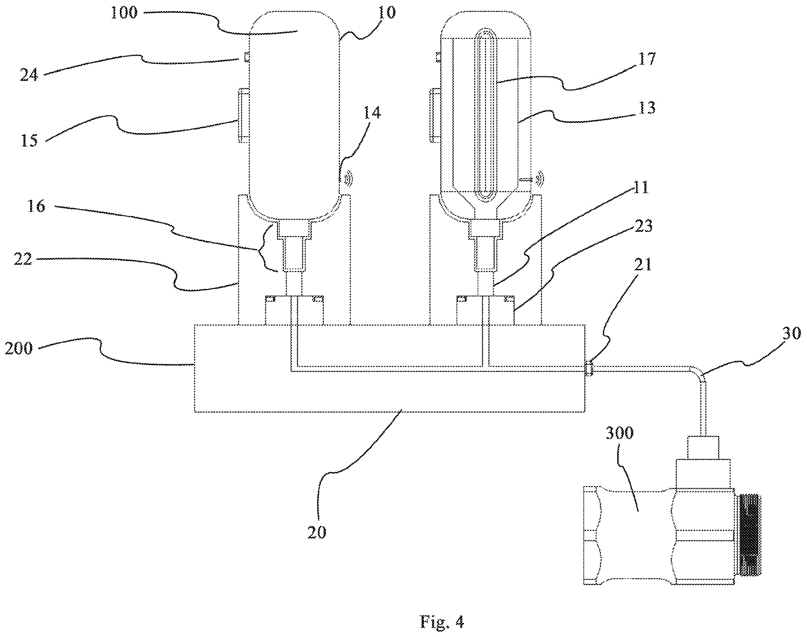

With reference to FIGS. 3 and 4, they show the main components of a kit associated with a container with valve for storing, dispensing and transporting aircraft fuel additives 100, and with a mixer 300. FIG. 3 shows a section of the "manifold-like" system 200 with its components. Said manifold may house a plurality of containers or in any case a number of containers such as to satisfy the requirements of the specific application.

FIG. 4 shows a section of the container with valve for storing, dispensing and transporting aircraft fuel additives 100, engaged on the "manifold-like" system 200 during refueling through a mixer 300.

The kit comprises a "manifold-like" system 200 consisting of: at least a manifold body 20, suitable for collecting the aircraft fuel additive; at least an outlet mouth with safety valve 21 adapted to allow and block the release of the aircraft fuel additive or the application of an extensible/fixed and flexible/rigid conduit 30; at least two coupling seats 23, so as to allow the stable and safe screwing of the coupling system 16 even with numerous containers with valves for storing, dispensing and transporting aircraft fuel additives 100 used simultaneously; at least a support system 22, suitable for ensuring the stability of the containers with valve for storing, dispensing and transporting aircraft fuel additives 100 during the collection and/or release step.

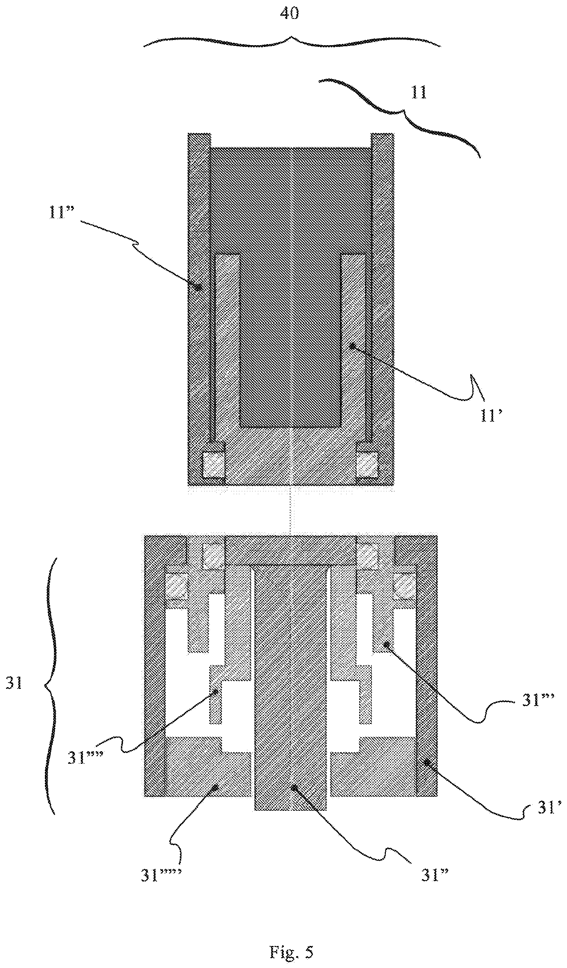

FIG. 5 shows a section of the internal components of the valve system 40 in the rest step.

The valve system comprises: at least a valve of the mixer 31, engaged at a mixer 300 and a valve of the container 11, engaged at said coupling system 16, so as to allow the transfer of the additive from said container with valve for storing, dispensing and transporting aircraft fuel additives 100 to said mixer 300; said valve of the mixer 31 and said valve of the container 11 being mating exclusively to each other; said valve of the container 11 being adapted to retain the aircraft fuel additive inside the body 10; said valve of the container comprising a fixed shutter of the container 11", adapted to come into contact with said valve of the mixer 31, and said fixed shutter of the container 11" being adapted to mobilize the internal components of said valve of the mixer 31, entering the casing 31' of said valve of mixer 31 in such a way that the aircraft fuel additive enters said valve of mixer 31 creating channels; said valve of the mixer 31 being adapted to allow the passage of the regulated flow of aircraft fuel additive received by said valve of the container 11 inside said mixer 300; said valve of the mixer 31 being provided with a fixed shutter of the mixer 31", adapted to come into contact with a movable shutter of the container 11', a slider 31‴ adapted to be mobilized by said fixed shutter of the container 11", by means of pressure carried out by an operator on site, in such a way as to set in turn in motion the movable shutter of the mixer 31ʺʺ until it impacts against an abutment of the slider 31ʺ‴, allowing the entry of the additive flow through the channels generated by such movements.

Finally, it is clear that modifications, additions or variants may be made to the invention described thus far which are apparent to those skilled in the art, without departing from the scope of protection that is provided by the appended claims.

## Claims

1. Container (100) with valve for storing, dispensing and transporting aircraft fuel additives, and mixer (300), comprising:
- a body (10) of the container (100), made of a material resistant to impacts, pressure and possible chemical attacks deriving from their presence and use during refueling steps; said body (10) being suitable to contain a predetermined amount of the additive to be mixed with the aircraft fuel; said body (10) having a coupling end (18) suitable to allow the use and the transportation by an operator *in loco*;
- at least a coupling system (16), engaged at the coupling end (18) of said body (10), suitable to ensure stable but reversible connection of said body (10) to an external supply system for conveying the additive contained in said body (10) into the dispensed fuel flow;
- at least a valve system (40) comprising a valve of the mixer (31), engaged at the mixer (300) and a valve of the container (11), engaged at said coupling system (16), so as to allow the transfer of the additive from said body (10) of the container (100) to said mixer (31); said valve of the mixer (31) being adapted to allow the passage of the regulated flow of additive received by said valve of the container inside said mixer; said valve of the mixer (31) and said valve of the container (11) being complementary and exclusively combinable, so that the use of one necessarily requires the presence of the other; said valve of the container (11) suitable to hold the additive inside the body (10); said valve of the container (11) consisting of a fixed shutter of the container (11ʺ), suitable to come into contact with said valve of the mixer (31), and said fixed shutter of the container (11") being suitable to move internal components of said valve of the mixer (31), entering into a casing
(31') of said valve of the mixer (31) so that the additive enters into said valve of the mixer (31) by creating channels; said valve of the mixer (31) suitable to allow the through-flow of the adjusted flow of additive received from said valve of the container (11) into said mixer (300); said valve of the mixer (31) being provided with a fixed shutter of the mixer (31"), suitable to come into contact with a movable shutter of the container (11'), a slider (31‴) suitable to be moved by said fixed shutter of the container (11"), through pressure exerted by an operator in loco, so as to in turn move the movable shutter of the mixer (31ʺʺ) until it impacts against an abutment of the slider (31ʺ‴), allowing the entry of the additive flow through the channels generated by such movements;
- at least a hermetic sealing system (12), which can be opened/closed and engaged at said coupling system (16), suitable to hermetically insulate the additive in said body (10);
- at least a compensation valve (24), engaged on said body (10), suitable to balance the internal pressure of the container during use;
- at least a level sensor or gauge (17), installed in said body (10), suitable to detect the level of the additive present in said body (10);
- at least a wired or wireless connection module, connected to said level sensor or gauge (17), suitable to allow the communication of the detected datum from said level sensor or gauge (17) to at least a possible alarm system (14);
- at least one said alarm system (14), engaged on said body (10) by means of a common mechanical or magnetic device and being connected by means of said connection module to said level sensor or gauge (17), suitable to be activated should there be detected the imminent exhaustion of the additive through a possible acoustic signaling device and/or luminous LED; said alarm system (14) being suitable to be activated/deactivated, by means of a microswitch, so as to allow the use thereof only under conditions where the operating environment allows it.

2. Container (100) with valve for storing, dispensing and transporting aircraft fuel additives, and mixer (300), according to the preceding claim 1, **characterized in that** said body (10) is made of recyclable materials and is ergonomic and compact, so as to allow easy transportation/use thereof.

3. Container (100) with valve for storing, dispensing and transporting aircraft fuel additives, and mixer (300), according to any one of the preceding claims **characterized in that** said body (10) is transparent so as to allow the operator to check the level of additive therein.

4. Container (100) with valve for storing, dispensing and transporting aircraft fuel additives, and mixer (300), according to any one of the preceding claims 1 or 2, **characterized in that** said body (10) has a sight glass (15), which allows the operator to check the level of additive therein additionally/alternatively to the level sensor or gauge (17).

5. Container (100) with valve for storing, dispensing and transporting aircraft fuel additives, and mixer (300), according to any one of the preceding claims, **characterized in that** it comprises a QR code, engaged on the outer surface of said body (10), suitable to be scanned using mobile devices; said QR code being suitable to make the container traceable and provide information relating thereto.

6. Container (100) with valve for storing, dispensing and transporting aircraft fuel additives, and mixer (300), according to the preceding claim 5, **characterized in that** said QR code is printed on a medium made of material resistant to additives and fuel.

7. Container (100) with valve for storing, dispensing and transporting aircraft fuel additives, and mixer (300), according to the preceding claim 5, **characterized in that** said QR code is printed using a laser printer directly on said body (10) and in a visible position during use.

8. Container (100) with valve for storing, dispensing and transporting aircraft fuel additives, and mixer (300), according to any one of the preceding claims, **characterized in that** it comprises an RFID label, installed on the surface of said body (10), suitable to be read by RFID readers so as to allow immediate recognition.

9. Container (100) with valve for storing, dispensing and transporting aircraft fuel additives, and mixer (300), according to any one of the preceding claims, **characterized in that** it comprises compression-loaded springs (50-50'-50") installed in the obtained channels, said springs (50-50'-50") being suitable to exert the pressure required to close/open each surface functional to the containment and the through-flow of the fluid transported by means of the container.

10. Container (100) with valve for storing, dispensing and transporting aircraft fuel additives, and mixer (300), according to any one of the preceding claims, **characterized in that** said body (10) contains a pressurization and containment bag (13) therein, suitable to contain the additive providing further safety during refueling, allowing the recycling thereof and facilitating the suctioning of the fluid in the mixer (300); said pressurization and containment bag (13) suitable to be removed from said body (10) by opening said coupling system (16), ensuring that additive residues remain therein; said pressurization and containment bag (13) is suitable to provide a dynamic preload to the fluid to be mixed so as to facilitate the suctioning thereof from the mixer; said pressurization and containment bag (13) suitable to be contracted, with the ensuing drop of the level of the liquid, by said compensation valve (24).

11. Container (100) with valve for storing, dispensing and transporting aircraft fuel additives, and mixer (300), according to the preceding claim 10, **characterized in that** said pressurization and containment bag (13) inside the body (10), suitable to contain the additive, is made of recyclable material.

12. Kit associated with a container (100) with valve for storing, dispensing and transporting aircraft fuel additives, and with a mixer (300), according to any one of claims 1 to 9, **characterized in that** it comprises:
- at least a container (100) with valve for storing, dispensing and transporting aircraft fuel additives, and mixer (100), according to any one of the preceding claims 1 to 9; and
- at least a "manifold-like" system (200) suitable to allow the simultaneous use of several containers (100) during refueling.

13. Kit associated with a container (100) with valve for storing, dispensing and transporting aircraft fuel additives, and with a mixer (300), according to the preceding claim 12, **characterized in that** said "manifold-like" system (200) comprises:
- at least a manifold body (20), suitable to convey the additive;
- at least two seats (23) for coupling on said manifold body (10), shaped so as to allow the correct insertion of said coupling system (16);
- at least an outlet mouth with safety valve (21) engaged on a wall of the manifold body (20), suitable to allow the adjustable outflow of the additive or the application of an extensible/fixed and flexible/rigid duct (30) suitable to introduce said additive into an external mixer (300);
- at least a support system (22), suitable to ensure the stability of the containers (100) during the collection of said additive in said manifold body (20) and/or during the release of said additive in said mixer (300) through said outlet mouth with safety valve (21).

14. Kit associated with a container (100) with valve for storing, dispensing and transporting aircraft fuel additives, and with a mixer (300), according to the preceding claims 12 or 13, **characterized in that** it comprises an alarm system (14) suitable to warn the operator of the imminent exhaustion of the additive by means of a sound signal; said sound alarm system (14) being connected to a wired or wireless connection module.

15. Method for the operation of a container or a kit for a container (100) with valve for storing, dispensing and transporting aircraft fuel additives and mixer (300) according to any one of the preceding claims and **characterized in that** it comprises the following steps:
- the operator couples the valve of the container (11) and the valve of the mixer (31) by pressing, placing the movable shutter of the container (11') on the fixed shutter of the mixer (31"), facilitated by alignment seats and ensuring the fixing;
- the operator exerts a further pressure allowing the fixed shutter of the container (11") to slide in the casing (31') of the valve of the mixer (31) and generate a channel which is filled with the additive awaiting the flow through the valve of the mixer;
- the operator rotates the container (100) with valve for storing, dispensing and transporting aircraft fuel additives up to the end of the rotation allowed so that the movable shutter of the valve of the mixer (31ʺʺ), pushed by the slider (317‴) up to the abutment of the slider (31ʺ‴), is fully retracted, and the fixed shutter of the container (11") is fully extended inside the casing (31') of the valve of the mixer (31); the through-flow channels, thus created, are fully open and the additive flows out from the container (100) with valve for storing, dispensing and transporting aircraft fuel additives to the mixer (300);
- once through with the dispensing of the additive, the operator rotates- in the reverse direction - the container (100) with valve for storing, dispensing and transporting aircraft fuel additives and disengages the movable shutter of the mixer (31‴) which, returning to the inoperative position, creates a depression drawing back the possible liquid left in the channel; the flowing and ensuing draw back of liquid prevents the formation of possible residual drops on the outer surface of the valve of the mixer (31);
- the operator removes the container (100) with valve for storing, dispensing and transporting aircraft fuel additives and the relative valve of the container (11), the movable shutter of the container (31ʺʺ and 31‴) returns to the initial position thereof.

## Patentansprüche

1. Behälter (100) mit Ventil zur Lagerung, Abgabe und zum Transport von Flugzeugkraftstoffadditiven und Mischer (300), aufweisend:
- einen Körper (10) des Behälters (100), hergestellt aus einem Material, das gegen Stöße, Druck und mögliche chemische Angriffe, die sich aus ihrer Anwesenheit und Verwendung während Betankungsschritten ergeben, beständig ist; wobei der Körper (10) geeignet ist, eine vorbestimmte Menge des mit dem Flugzeugkraftstoff zu mischenden Additivs aufzunehmen; wobei der Körper (10) ein Kopplungsende (18), das geeignet ist, die Verwendung und den Transport durch einen Bediener *vor Ort* zu ermöglichen, aufweist;
- zumindest ein Kopplungssystem (16), das an dem Kopplungsende (18) des Körpers (10) angebracht und geeignet ist, eine stabile, aber reversible Verbindung des Körpers (10) mit einem externen Versorgungssystem zu gewährleisten, um das in dem Körper (10) enthaltene Additiv in den abgegebenen Kraftstoffstrom zu befördern;
- zumindest ein Ventilsystem (40), das ein Ventil des Mischers (31) aufweist, das an dem Mischer (300) angebracht ist, und ein Ventil des Behälters (11), das an dem Kopplungssystem (16) angebracht ist, um die Übertragung des Additivs von dem Körper (10) des Behälters (100) zu dem Mischer (31) zu ermöglichen; wobei das Ventil des Mischers (31) dazu angepasst ist, den Durchfluss des geregelten Stroms von Additiv, das durch das Ventil des Behälters in dem Mischer empfangen wird, zu ermöglichen; wobei das Ventil des Mischers (31) und das Ventil des Behälters (11) komplementär und ausschließlich kombinierbar sind, so dass die Verwendung des einen notwendigerweise das Vorhandensein des anderen erfordert; wobei das Ventil des Behälters (11) dazu geeignet ist, das Additiv innerhalb des Körpers (10) zu halten; wobei das Ventil des Behälters (11) aus einem festen Verschluss des Behälters (11") besteht, der dazu geeignet ist, mit dem Ventil des Mischers (31) in Kontakt zu kommen, und wobei der feste Verschluss des Behälters (1") dazu geeignet ist, innere Komponenten des Ventils des Mischers (31), die in ein Gehäuse (31') des Ventils des Mischers (31) eintreten, zu bewegen, so dass das Additiv durch Erzeugen von Kanälen in das Ventil des Mischers (31) eintritt; wobei das Ventil des Mischers (31) geeignet ist, den Durchfluss des eingestellten Stroms von Additiv, das von dem Ventil des Behälters (11) empfangen wird, in den Mischer (300) zu ermöglichen; wobei das Ventil des Mischers (31) mit einem festen Verschluss des Mischers (31") versehen ist, der dazu geeignet ist, mit einem beweglichen Verschluss des Behälters (11') in Kontakt zu kommen, wobei ein Schieber (31‴), der geeignet ist, durch den festen Verschluss des Behälters (11") durch einen durch einen Bediener vor Ort ausgeübten Druck bewegt zu werden, um wiederum den beweglichen Verschluss des Mischers (31ʺʺ) zu bewegen, bis er gegen einen Anschlag des Schiebers (31ʺ‴) stößt, wodurch der Eintritt des Additivstroms durch die durch solche Bewegungen erzeugten Kanäle ermöglicht wird;
- zumindest ein hermetisches Dichtungssystem (12), das geöffnet/geschlossen und an dem Kopplungssystem (16) angebracht werden kann und dazu geeignet ist, das Additiv in dem Körper (10) hermetisch zu isolieren;
- zumindest ein Ausgleichsventil (24), das an dem Körper (10) angebracht und dazu geeignet ist, den Innendruck des Behälters während des Gebrauchs auszugleichen;
- zumindest einen Füllstandssensor oder ein Füllstandsmessgerät (17), der/das in dem Körper (10) installiert und dazu geeignet ist, den Füllstand des in dem Körper (10) vorhandenen Additivs festzustellen;
- zumindest ein kabelgebundenes oder kabelloses Verbindungsmodul, das mit dem Füllstandssensor oder dem Füllstandsmessgerät (17) verbunden und dazu geeignet ist, die Übertragung der von dem Füllstandssensor oder -messgerät (17) ermittelten Information an zumindest ein mögliches Alarmsystem (14) zu ermöglichen;
- zumindest ein Alarmsystem (14), das mittels einer gemeinsamen mechanischen oder magnetischen Vorrichtung auf dem Körper (10) angebracht ist und mittels des Verbindungsmoduls mit dem Füllstandsensor oder -messgerät (17) verbunden ist, dazu geeignet, aktiviert zu werden, falls die bevorstehende Aufbrauchung des Additivs durch eine mögliche akustische Signalvorrichtung und/oder eine leuchtende LED festgestellt wird; wobei das Alarmsystem (14) geeignet ist, mittels eines Mikroschalters aktiviert/deaktiviert zu werden, um seine Verwendung nur unter Bedingungen, unter denen es die Betriebsumgebung zulässt, zu ermöglichen.

2. Behälter (100) mit Ventil zur Lagerung, Abgabe und zum Transport von Flugzeugkraftstoffadditiven und Mischer (300) gemäß dem vorstehenden Anspruch 1, **dadurch gekennzeichnet, dass** der Körper (10) aus recycelbaren Materialien hergestellt ist und ergonomisch und kompakt ist, um seinen einfachen Transport/eine einfache Verwendung zu ermöglichen.

3. Behälter (100) mit Ventil zur Lagerung, Abgabe und zum Transport von Flugzeugkraftstoffadditiven und Mischer (300) gemäß einem der vorstehenden Ansprüche, **dadurch gekennzeichnet, dass** der Körper (10) transparent ist, damit der Bediener den Füllstand des Additivs darin überprüfen kann.

4. Behälter (100) mit Ventil zur Lagerung, Abgabe und zum Transport von Flugzeugkraftstoffadditiven und Mischer (300) gemäß einem der vorstehenden Ansprüche 1 oder 2, **dadurch gekennzeichnet, dass** der Körper (10) ein Schauglas (15), das es dem Bediener ermöglicht, den Füllstand des Additivs darin zusätzlich/alternativ zu dem Füllstandsensor oder -messgerät (17) zu überprüfen, aufweist.

5. Behälter (100) mit Ventil zur Lagerung, Abgabe und zum Transport von Flugzeugkraftstoffadditiven und Mischer (300) gemäß einem der vorstehenden Ansprüche, **dadurch gekennzeichnet, dass** er einen QR-Code aufweist, der auf der Außenfläche des Körpers (10) angebracht und geeignet ist, unter Verwendung von mobilen Geräten gescannt zu werden; wobei der QR-Code dazu geeignet ist, den Behälter rückverfolgbar zu machen und Informationen darüber bereitzustellen.

6. Behälter (100) mit Ventil zur Lagerung, Abgabe und zum Transport von Flugzeugkraftstoffadditiven und Mischer (300) gemäß dem vorstehenden Anspruch 5, **dadurch gekennzeichnet, dass** der QR-Code auf ein Medium aus einem gegen Additive und Kraftstoff beständigen Material gedruckt ist.

7. Behälter (100) mit Ventil zur Lagerung, Abgabe und zum Transport von Flugzeugkraftstoffadditiven und Mischer (300) gemäß dem vorstehenden Anspruch 5, **dadurch gekennzeichnet, dass** der QR-Code unter Verwendung eines Laserdrucker direkt auf den Körper (10) und an einer während des Gebrauchs sichtbaren Stelle gedruckt ist.

8. Behälter (100) mit Ventil zur Lagerung, Abgabe und zum Transport von Flugzeugkraftstoffadditiven und Mischer (300) gemäß einem der vorstehenden Ansprüche, **dadurch gekennzeichnet, dass** er ein RFID-Etikett aufweist, das auf der Oberfläche des Körpers (10) angebracht ist und geeignet ist, durch RFID-Lesegeräte gelesen zu werden, um eine sofortige Erkennung zu ermöglichen.

9. Behälter (100) mit Ventil zur Lagerung, Abgabe und zum Transport von Flugzeugkraftstoffadditiven und Mischer (300) gemäß einem der vorstehenden Ansprüche, **dadurch gekennzeichnet, dass** er in den erhaltenen Kanälen installierte druckbelastete Federn (50-50'-50") aufweist, wobei die Federn (50-50'-50") geeignet sind, den Druck auszuüben, der erforderlich ist, um jede Oberfläche, die für die Zurückhaltung und den Durchfluss des mittels des Behälters transportierten Fluids funktionsgerecht ist, zu schließen/zu öffnen.

10. Behälter (100) mit Ventil zur Lagerung, Abgabe und zum Transport von Flugzeugkraftstoffadditiven und Mischer (300) gemäß einem der vorstehenden Ansprüche, **dadurch gekennzeichnet, dass** der Körper (10) einen Druckbeaufschlagungs- und Auffangbeutel (13) enthält, der geeignet ist, das Additiv aufzunehmen, was für zusätzliche Sicherheit beim Betanken sorgt, dessen Recycling ermöglicht und das Ansaugen des Fluids in den Mischer (300) erleichtert; der Druckbeaufschlagungs- und Auffangbeutel (13) geeignet ist, durch Öffnen des gekoppelten Kopplungssystems (16) von dem Körper (10) entfernt zu werden, wobei sichergestellt ist, dass Additivrückstände darin verbleiben; der Druckbeaufschlagungs- und Auffangbeutel (13) geeignet ist, eine dynamische Vorlast auf das zu mischende Fluid auszuüben, um dessen Absaugen aus dem Mischer zu erleichtern; wobei der Druckbeaufschlagungs- und Auffangbeutel (13) geeignet ist, durch das Ausgleichsventil (24) mit dem sich daraus ergebenden Abfall des Füllstands der Flüssigkeit zusammengezogen zu werden.

11. Behälter (100) mit Ventil zur Lagerung, Abgabe und zum Transport von Flugzeugkraftstoffadditiven und Mischer (300) gemäß dem vorstehenden Anspruch 10, **dadurch gekennzeichnet, dass** der Druckbeaufschlagungs- und Aufbewahrungsbeutel (13) innerhalb des Körpers (10), der geeignet ist, das Additiv aufzunehmen, aus recycelbarem Material hergestellt ist.

12. Kit in Verbindung mit einem Behälter (100) mit Ventil zur Lagerung, Abgabe und zum Transport von Flugzeugkraftstoffadditiven und mit einem Mischer (300) gemäß einem der Ansprüche 1 bis 9, **dadurch gekennzeichnet, dass** es aufweist:
- zumindest einen Behälter (100) mit Ventil zur Lagerung, Abgabe und zum Transport von Flugzeugkraftstoffadditiven, sowie einen Mischer (100) gemäß einem der vorstehenden Ansprüche 1 bis 9; und
- zumindest ein "verteilerartiges" System (200), das geeignet ist, die gleichzeitige Verwendung mehrerer Behälter (100) während des Betankens zu ermöglichen.

13. Kit in Verbindung mit einem Behälter (100) mit Ventil zur Lagerung, Abgabe und zum Transport von Flugzeugkraftstoffadditiven und mit einem Mischer (300) gemäß dem vorstehenden Anspruch 12, **dadurch gekennzeichnet, dass** das "verteilerartige" System (200) aufweist:
- zumindest einen Verteilerkörper (20), der geeignet ist, das Additiv zu fördern;
- zumindest zwei Sitze (23) zum Koppeln an dem Verteilerkörper (10), die so geformt sind, dass sie das korrekte Einführen des Kopplungssystems (16) ermöglichen;
- zumindest eine Auslassöffnung mit Sicherheitsventil (21), die an einer Wand des Verteilerkörpers (20) angebracht und geeignet ist, den einstellbaren Ausfluss des Additivs oder die Anwendung einer ausziehbaren/festen und flexiblen/starren Leitung (30), die geeignet ist, das Additiv in einen externen Mischer (300) einzuführen, zu ermöglichen;
- zumindest ein Trägersystem (22), das geeignet ist, die Stabilität der Behälter (100) während der Sammlung des Additivs in dem Verteilerkörper (20) und/oder während der Freisetzung des Additivs in den Mischer (300) durch die Auslassöffnung mit Sicherheitsventil (21) sicherzustellen.

14. Kit in Verbindung mit einem Behälter (100) mit Ventil zur Lagerung, Abgabe und zum Transport von Flugzeugkraftstoffadditiven und mit einem Mischer (300) gemäß den vorstehenden Ansprüchen 12 oder 13, **dadurch gekennzeichnet, dass** es ein Alarmsystem (14), das geeignet ist, den Bediener mittels eines akustischen Signals vor der bevorstehenden Aufbrauchung des Additivs zu warnen, aufweist; wobei das akustische Alarmsystem (14) mit einem kabelgebundenen oder kabellosen Verbindungsmodul verbunden ist.

15. Verfahren zum Betrieb eines Behälters oder eines Kits für einen Behälter (100) mit Ventil zur Lagerung, Abgabe und zum Transport von Flugzeugkraftstoffadditiven und einem Mischer (300) gemäß einem der vorstehenden Ansprüche, **dadurch gekennzeichnet, dass** es die folgenden Schritte aufweist:
- der Bediener koppelt das Ventil des Behälters (11) und das Ventil des Mischers (31) durch Drücken, wobei er den beweglichen Verschluss des Behälters (11') auf dem festen Verschluss des Mischers (31") platziert, was durch Ausrichtungssitze erleichtert wird und die Befestigung sicherstellt;
- der Bediener übt einen weiteren Druck aus, der es ermöglicht, dass der feste Verschluss des Behälters (11") in das Gehäuse (31') des Ventils des Mischers (31) gleitet und einen Kanal erzeugt, der mit dem Additiv gefüllt wird, das darauf wartet, durch das Ventil des Mischers zu fließen;
- der Bediener dreht den Behälter (100) mit Ventil zur Lagerung, Abgabe und zum Transport von Flugzeugkraftstoffadditiven bis zum Ende der zulässigen Drehung, so dass der bewegliche Verschluss des Ventils des Mischers (31ʺʺ), der durch den Schieber (31‴) bis zum Anschlag des Schiebers (31ʺ‴) gedrückt wird, vollständig zurückgezogen wird und der feste Verschluss des Behälters (11") innerhalb des Gehäuses (31') des Ventils des Mischers (31) vollständig ausgefahren ist; die so erzeugten Durchflusskanäle sind vollständig geöffnet und das Additiv strömt aus dem Behälter (100) mit Ventil zur Lagerung, Abgabe und zum Transport von Flugzeugkraftstoffadditiven zu dem Mischer (300);
- Nach Abschluss der Abgabe des Additivs dreht der Bediener den Behälter (100) mit Ventil zur Lagerung, Abgabe und zum Transport von Flugzeugkraftstoffadditiven in der umgekehrten Richtung und löst den beweglichen Verschluss des Mischers (31‴), der, in die untätige Position zurückkehrend, einen Unterdruck erzeugt, der die möglicherweise im Kanal verbliebene Flüssigkeit zurückzieht; Das Ausfließen und das sich daraus ergebende Zurückziehen der Flüssigkeit verhindert die Bildung möglicher Resttropfen auf der Außenfläche des Ventils des Mischers (31);
- Der Bediener entfernt den Behälter (100) mit Ventil zur Lagerung, Abgabe und zum Transport von Flugzeugkraftstoffadditiven und das entsprechende Ventil des Behälters (11), wobei der bewegliche Verschluss des Behälters (31ʺʺ und 31‴) in seine Ausgangsposition zurückkehrt.

## Revendications

1. Récipient (100) avec vanne pour le stockage, la distribution et le transport d'additifs de carburant d'aéronefs, et mélangeur (300), comprenant :
- un corps (10) du récipient (100), composé d'un matériau résistant aux chocs, à la pression et aux éventuelles attaques chimiques découlant de leur présence et de leur utilisation lors des étapes de ravitaillement ; ledit corps (10) étant adapté à contenir une quantité prédéterminée de l'additif devant être mélangé avec le carburant d'aéronef ; ledit corps (10) présentant une extrémité d'accouplement (18) adaptée à permettre l'utilisation et le transport par un opérateur sur place ;
- au moins un système d'accouplement (16), mis en prise au niveau de l'extrémité d'accouplement (18) dudit corps (10), adapté à assurer une connexion stable mais réversible dudit corps (10) à un système d'alimentation externe pour le transport de l'additif contenu dans ledit corps (10) dans le flux de carburant distribué ;
- au moins un système de vanne (40) comprenant une vanne du mélangeur (31), mise en prise au niveau du mélangeur (300) et une vanne du récipient (11), mise en prise au niveau dudit système d'accouplement (16), de manière à permettre le transfert de l'additif dudit corps (10) du récipient (100) vers ledit mélangeur (31) ; ladite vanne du mélangeur (31) étant adaptée à permettre le passage du flux régulé d'additif reçu par ladite vanne du récipient à l'intérieur dudit mélangeur ; ladite vanne du mélangeur (31) et ladite vanne du récipient (11) étant complémentaires et exclusivement combinables, de sorte que l'utilisation de l'une nécessite nécessairement la présence de l'autre ; ladite vanne du récipient (11) étant adaptée à retenir l'additif à l'intérieur du corps (10) ; ladite vanne du récipient (11) consistant en un obturateur fixe du récipient (11"), adapté à entrer en contact avec ladite vanne du mélangeur (31), et ledit obturateur fixe du récipient (11") étant adapté à déplacer les composants internes de ladite vanne du mélangeur (31), en pénétrant dans un carter (31') de ladite vanne du mélangeur (31) de sorte que l'additif pénètre dans ladite vanne du mélangeur (31) en créant des canaux ; ladite vanne du mélangeur (31) étant adaptée à permettre le passage du flux ajusté d'additif reçu de ladite vanne du récipient (11) dans ledit mélangeur (300) ; ladite vanne du mélangeur (31) étant dotée d'un obturateur fixe du mélangeur (31"), adapté à entrer en contact avec un obturateur mobile du récipient (11'), d'un coulisseau (31‴) adapté à être déplacé par ledit obturateur fixe du récipient (11"), par le biais d'une pression exercée par un opérateur sur place, de manière à déplacer à son tour l'obturateur mobile du mélangeur (31ʺʺ) jusqu'à ce qu'il heurte une butée du coulisseau (31ʺ‴), permettant l'entrée du flux d'additif par le biais des canaux générés par de tels mouvements ;
- au moins un système d'étanchéité hermétique (12), qui peut être ouvert/fermé et mis en prise au niveau dudit système d'accouplement (16), adapté à isoler hermétiquement l'additif dans ledit corps (10) ;
- au moins une vanne de compensation (24), mise en prise sur ledit corps (10), adaptée à équilibrer la pression interne du récipient pendant son utilisation ;
- au moins un capteur ou une jauge de niveau (17), installé(e) dans ledit corps (10), adapté(e) à détecter le niveau de l'additif présent dans ledit corps (10) ;
- au moins un module de connexion filaire ou sans fil, connecté audit capteur ou à ladite jauge de niveau (17), adapté à permettre la communication de la donnée détectée à partir dudit capteur ou de ladite jauge de niveau (17) à au moins un éventuel système d'alarme (14) ;
- au moins ledit système d'alarme (14), mis en prise sur ledit corps (10) au moyen d'un dispositif mécanique ou magnétique commun et connecté au moyen du module de connexion audit capteur ou à ladite jauge de niveau (17), adapté à être activé en cas de détection de l'épuisement imminent de l'additif par le biais d'un éventuel dispositif de signalisation acoustique et/ou d'une éventuelle DEL lumineuse ; ledit système d'alarme (14) étant adapté pour être activé/désactivé au moyen d'un microcontact, de manière à permettre son utilisation uniquement dans des conditions où l'environnement d'exploitation le permet.

2. Récipient (100) avec vanne pour le stockage, la distribution et le transport d'additifs de carburant d'aéronefs, et mélangeur (300), selon la revendication 1 précédente, **caractérisés en ce que** ledit corps (10) est composé de matériaux recyclables et est ergonomique et compact, de manière à permettre un transport et une utilisation faciles.

3. Récipient (100) avec vanne pour le stockage, la distribution et le transport d'additifs de carburant d'aéronefs, et mélangeur (300), selon l'une des revendications précédentes **caractérisés en ce que** ledit corps (10) est transparent de manière à permettre à l'opérateur de vérifier le niveau d'additif dans celui-ci.

4. Récipient (100) avec vanne pour le stockage, la distribution et le transport d'additifs de carburant d'aéronefs, et mélangeur (300), selon l'une des revendications 1 ou 2 précédentes, **caractérisés en ce que** ledit corps (10) est doté d'un regard (15), permettant à l'opérateur de vérifier le niveau d'additif dans celui-ci, en complément du/en alternative au capteur de niveau ou de/à la jauge de niveau (17).

5. Récipient (100) avec vanne pour le stockage, la distribution et le transport d'additifs de carburant d'aéronefs, et mélangeur (300), selon l'une des revendications précédentes, **caractérisés en ce qu'**ils comprennent un code QR, placé sur la surface externe dudit corps (10), adapté à être scanné au moyen de dispositifs mobiles ; ledit code QR étant adapté à rendre le récipient traçable et à fournir des informations relatives à celui-ci.

6. Récipient (100) avec vanne pour le stockage, la distribution et le transport d'additifs de carburant d'aéronefs, et mélangeur (300), selon la revendication 5 précédente, **caractérisés en ce que** ledit code QR est imprimé sur un support composé de matériau résistant aux additifs et au carburant.

7. Récipient (100) avec vanne pour le stockage, la distribution et le transport d'additifs de carburant d'aéronefs, et mélangeur (300), selon la revendication 5 précédente, **caractérisés en ce que** ledit code QR est imprimé au moyen d'une imprimante laser directement sur ledit corps (10) et dans une position visible pendant l'utilisation.

8. Récipient (100) avec vanne pour le stockage, la distribution et le transport d'additifs de carburant d'aéronefs, et mélangeur (300), selon l'une des revendications précédentes, **caractérisés en ce qu'**ils comprennent une étiquette RFID, installée sur la surface dudit corps (10), adaptée à être lue par des lecteurs RFID de manière à permettre une reconnaissance immédiate.

9. Récipient (100) avec vanne pour le stockage, la distribution et le transport d'additifs de carburant d'aéronefs, et mélangeur (300), selon l'une des revendications précédentes, **caractérisés en ce qu'**ils comprennent des ressorts (50-50'-50") chargés en compression installés dans les canaux obtenus, lesdits ressorts (50-50'-50") étant adaptés à exercer la pression nécessaire à la fermeture/l'ouverture de chaque surface associée au confinement et au passage du fluide transporté au moyen du récipient.

10. Récipient (100) avec vanne pour le stockage, la distribution et le transport d'additifs de carburant d'aéronefs, et mélangeur (300), selon l'une des revendications précédentes, **caractérisés en ce que** ledit corps (10) contient un sac de pressurisation et de confinement (13) en son sein, adapté à contenir l'additif et assurant une sécurité supplémentaire lors du ravitaillement, permettant son recyclage et facilitant l'aspiration du fluide dans le mélangeur (300) ; ledit sac de pressurisation et de confinement (13) étant adapté à être retiré dudit corps (10) par l'ouverture dudit système d'accouplement (16), en s'assurant que des résidus d'additifs restent en son sein ; ledit sac de pressurisation et de confinement (13) est adapté à fournir une précharge dynamique au fluide devant être mélangé de manière à faciliter son aspiration hors du mélangeur, ledit sac de pressurisation et de confinement (13) étant adapté à se contracter, avec la baisse du niveau du liquide qui en résulte, par ladite vanne de compensation (24).

11. Récipient (100) avec vanne pour le stockage, la distribution et le transport d'additifs de carburant d'aéronefs, et mélangeur (300), selon la revendication 10 précédente, **caractérisés en ce que** ledit sac de pressurisation et de confinement (13) à l'intérieur du corps (10), adapté à contenir l'additif, est composé de matériau recyclable.

12. Kit associé à un récipient (100) avec vanne pour le stockage, la distribution et le transport d'additifs de carburant d'aéronefs, et à un mélangeur (300), selon l'une des revendications 1 à 9, **caractérisé en ce qu'**il comprend :
- au moins un récipient (100) avec vanne pour le stockage, la distribution et le transport d'additifs de carburant d'aéronefs, et un mélangeur (100), selon l'une des revendications 1 à 9 précédentes ; et
- au moins un système « de type collecteur » (200) adapté à permettre l'utilisation simultanée de plusieurs récipients (100) lors du ravitaillement.

13. Kit associé à un récipient (100) avec vanne pour le stockage, la distribution et le transport d'additifs de carburant d'aéronefs, et à un mélangeur (300), selon la revendication 12 précédente, **caractérisé en ce que** ledit système « de type collecteur » (200) comprend :
- au moins un corps de collecteur (20), adapté à transporter l'additif ;
- au moins deux sièges (23) pour l'accouplement sur ledit corps de collecteur (10), formés de manière à permettre l'insertion correcte dudit système d'accouplement (16) ;
- au moins une bouche de sortie avec une vanne de sécurité (21) fixée sur une paroi du corps de collecteur (20), conçue pour permettre l'écoulement ajustable de l'additif ou l'application d'un conduit extensible/fixe et flexible/rigide (30) adapté à introduire ledit additif dans un mélangeur externe (300) ;
- au moins un système de support (22), apte à assurer la stabilité des récipients (100) lors de la collecte dudit additif dans ledit corps de collecteur (20) et/ou lors de la libération dudit additif dans ledit mélangeur (300) à travers ladite bouche de sortie avec vanne de sécurité (21).

14. Kit associé à un récipient (100) avec vanne pour le stockage, la distribution et le transport d'additifs pour carburant d'aéronefs, et à un mélangeur (300), selon les revendications 12 ou 13 précédentes, **caractérisé en ce qu'**il comprend un système d'alarme (14) adapté à avertir l'opérateur de l'épuisement imminent de l'additif au moyen d'un signal sonore ; ledit système d'alarme sonore (14) étant connecté à un module de connexion filaire ou sans fil.

15. Procédé pour le fonctionnement d'un récipient ou d'un kit pour un récipient (100) avec vanne pour le stockage, la distribution et le transport d'additifs de carburant d'aéronefs et un mélangeur (300) selon l'une des revendications précédentes et **caractérisé en ce qu'**il comprend les étapes suivantes :
- l'opérateur accouple la vanne du récipient (11) et la vanne du mélangeur (31) par pression, placement de l'obturateur mobile du récipient (11') sur l'obturateur fixe du mélangeur (31"), facilité par des sièges d'alignement et assurance de la fixation ;
- l'opérateur exerce une pression supplémentaire permettant à l'obturateur fixe du récipient (11") de coulisser dans le carter (31') de la vanne du mélangeur (31) et de générer un canal qui est rempli d'additif en attente de l'écoulement à travers la vanne du mélangeur ;
- l'opérateur fait tourner le récipient (100) équipé d'une vanne pour le stockage, la distribution et le transport d'additifs de carburant d'aéronef jusqu'à la fin de la rotation autorisée, de sorte que l'obturateur mobile de la vanne du mélangeur (31ʺʺ), poussé par le coulisseau (31‴) jusqu'à la butée du coulisseau (31ʺ‴), soit complètement rétracté, et que l'obturateur fixe du récipient (11'') soit entièrement déployé à l'intérieur du carter (31') de la vanne du mélangeur (31) ; les canaux d'écoulement ainsi créés sont entièrement ouverts et l'additif s'écoule hors du récipient (100) avec vanne pour le stockage, la distribution et le transport d'additifs de carburant d'aéronef vers le mélangeur (300) ;
- une fois l'additif distribué, l'opérateur fait tourner - dans le sens inverse - le récipient (100) avec vanne pour le stockage, la distribution et le transport d'additifs de carburant d'aéronef, et désengage l'obturateur mobile du mélangeur (31‴) qui, en revenant dans la position inopérante, crée une dépression aspirant le liquide éventuellement resté dans le canal ; l'écoulement et le retrait de liquide qui en résultent empêchent la formation d'éventuelles gouttes résiduelles sur la surface externe de la vanne du mélangeur (31) ;
- l'opérateur retire le récipient (100) avec vanne pour le stockage, la distribution et le transport d'additifs de carburant d'aéronef et la vanne relative du récipient (11), l'obturateur mobile du récipient (31ʺʺ et 31‴) revient à sa position initiale.
